# EUROPEAN PATENT APPLICATION

(11) **EP 2 783 822 A1**
(43) Date of publication of application: **01.10.2014**
(21) Application number: 11876040.4
(22) Date of filing: 22.11.2011
(51) Int. Cl.: B28D 1/02

(54) **SAWING OF HARD GRANITES**

(71) Applicant: Castro Gomez, Luis, 36201 Vigo (Pontevedra) (ES)
(72) Inventor: Castro Gomez, Luis, 36201 Vigo (Pontevedra) (ES)
(74) Representative: Temino Ceniceros, Ignacio
(86) International application number: PCT/ES2011/070809
(87) International publication number: WO 2013/076319

(57) **Abstract**

The invention relates to the use of sodium bentonite as a fluid bed that supports the grit and debris resulting from sawing. The invention also relates to the use of vibrating tables for separating the debris resulting from bentonite sawing. The invention describes a special centrifuge for concentrating the bentonite and recovering same. The invention includes an improvement to the supply of the inclined-plate settlers. The invention describes a centrifugal bentonite concentrator with no moving parts. The method can be used to reduce current sawing costs by up to about 70% and to achieve forward movements up to six times greater than usual.

## Description

### TECHNICAL FIELD

The present invention is comprised in the sector of manufacturing construction materials.

### PRIOR ART

Patents ES P 200902409, ES P 200201529 and others belonging to the same proprietor describe what is known on the subject.

Until now, the applicant's different studies and patents focused on using fine, soft powders, such as talc, clay and calcite. Bentonite was also tested, but the use thereof was rejected as a result of its higher cost and as it gave a result that was no different from other powders. Perhaps the bentonite that was acquired was pure calcium bentonite, which does not swell at all. However, upon carefully studying the two bentonites from different sources, it was found that sodium bentonite swells in water, and even in limewater, up to twenty times its dry volume, so the use thereof is of interest because it costs only two to five times more than clay. Furthermore, there is hardly any cost difference outside of Spain. Despite available information about calcium bentonite claiming that it swells up to 4 or 5 times, it is not true. It does not swell at all. What does swell, however, is the mixture of bentonites or sodium bentonite.

### DISCLOSURE OF THE INVENTION

The present invention relates to the use of sodium bentonite to support grit, wherein the swelling to cost ratio is the highest possible, mixed with limewater at 0.2% calcium hydroxide, saturated solution and excess calcium hydroxide, at the proportion of 97% or less limewater for 3% sodium montmorillonite or more, which is contained in bentonite, the proportions being by weight. This mixture, which keeps the grit in suspension, mixed with the maximum amount of grit possible, is pumped into the centers of the grooves or of the block if there are still no grooves, there being made in the upper portion of said block a water-collecting area with side and front walls, which can be made of rigid plastic foam, such as polyurethane or polystyrene, which do not alter the properties of the abrasive mixture, are readily applied and quite inexpensive. Since a minimum amount of mixture is pumped into each groove in this method, there cannot be any way for it to leak out; it must enter through the center of the grooves and about half of the incoming flow must exit at one of the two ends. Therefore, any cavity that there may be at the ends of or below the block will fill up with foam, except the central portion of the block that is between supports, which may fill up with the abrasive mixture in a tall enough water-collecting area.

The minimum sodium montmorillonite content that supports the grit in suspension must be determined experimentally for each batch from a different source. The other minerals present make it variable. Undissolved excess lime also affects the result.

This method can be applied not only to granites but also to all hard and soft rocks other than marble, limestones and others that are readily cut or sawed at a low cost with a diamond blade.

The component which gives bentonites the quality of swelling with water is sodium montmorillonite, the main component of bentonite found in the French area of Montmorillon. Hereinafter reference to bentonite is to be interpreted as reference to sodium montmorillonite.

The limewater-3% bentonite mixture supports the grit in suspension and allows a very high grit content per liter that is greater than any other method of sawing, and therefore the highest possible forward movement, up to 4 times greater than usual. In some experiments, forward movements that were 6 times greater than usual were achieved.

Any other material that has the property of swelling until considerably increasing its volume, is inexpensive, supports grit and debris resulting from sawing, and, finally, is easy to recover can be used instead of sodium bentonite.

3% sodium montmorillonite or more in the limewater plus montmorillonite mixture is enough to keep the grit in suspension. For safety's sake, a minimum of 1% sodium montmorillonite is claimed, because since bentonite is a natural soil it can contain other components improving its qualities.

Lime is necessary for not staining iron oxide rock. More than 0.2% lime is currently maintained in the mixture of sawing, saturated solution, and excess in suspension.

At the beginning of sawing, the abrasive mixture exits the block with hardly any debris resulting from sawing or crushed rock, so it can be integrally recovered and recirculated without any cleansing whatsoever, whereas as sawing progresses, the content of debris in the mixture gradually increases and it is necessary to improve the mixture by setting aside part of said debris-loaded mixture and adding another equal part of debris-free mixture, i.e., fresh mixture. When all the strips are sawing along their entire length, the entire mixture will be fresh. At that point it is possible to reconsider if the flow of mixture reaching the machine is the most suitable or if it should be changed. Reducing it has the advantage of reducing the cost of sawing as it uses less bentonite and needs less mixing or treatment equipment, or the same equipment for preparing the mixture can serve more machines. The limit is determined by the higher content of debris in the mixture, which does not give rise to a higher energy expenditure, deterioration of the sawing material and other risks. This limit is usually between 20 and 40% by volume of debris.

Much more than 40% would cause excessive rigidity or viscosity of the sludge or mixture which would increase energy consumption and deteriorate the plates. In any case, the debris content is zero in the center of the grooves and gradually increases until the outlets at the ends up to the suitable limit.

Each hardness or difficulty in sawing the rock requires a minimum flow rate. On the market of rocks in block form hardness is reported using numbers 1 to 5. Basalts, which are very hard rocks, and rocks having a hardness of 5 require at least 1 cm³ per groove and second. Rocks having a hardness of 4 require 1.35 cm³/groove and second. Rocks having a hardness of 3 require 1.8 cm³/groove and second, and rocks having a hardness of 2 require 2.7 cm³/groove and second. Finally, rocks having a hardness of 1 require more, but for some of them this method is not advantageous. With the indicated flow rates, the concentration of debris resulting from sawing is maintained in the mixture exiting the grooves at less than about 25% by volume. Grit can take up the other 25% by volume.

Sludge flow rates of more than 500 cm³/s and groove, which do not even enter the groove, are currently used.

The mixture exiting the machine contains grit which must be recovered, doing so by passing it through a cyclone after having remixed it with limewater at the proportion of water and the mixture or more water described in European patent 02720025.2. It can also be recovered using a vibrating or shaking table or any other non-magnetic method that would magnetize the grit and cluster it together.

Then, the mixture containing debris resulting from sawing, bentonite and limewater, cannot be disposed through the sewer system, nor can it be transported to any landfill given its considerable volume. It must be subjected to suitable treatment. The usual way of concentrating disposable materials today by filtration does not apply because bentonite blocks filters and furthermore does not allow recovery thereof. The present invention proposes a two-step separation, the first for separating the debris resulting from sawing in a vibrating or shaking table, where water with bentonite on one hand and debris resulting from sawing with fine grit residues and strips and more water with bentonite on the other are separated from one another. This part can be sent to another table or another level of the table to recover more bentonite along with water. The table will be in an enclosed area free of CO₂. Limestone would form if there were any carbon in the air and would render the table useless.

The vibrating or shaking table can also be applied to sawing with clay and other fine, soft materials because the vibration prevents flocculation of the clay, which makes separation difficult in the event of using clay.

The limewaters with bentonite will be sent to a tank having a volume of several m³, entering tangentially, close to the highest portion, where bentonite decants and clear water is separated above, said clear water being reused. The water with bentonite located in the lower portion of this tank, which can reach a concentration of a little more than 1% by natural decantation, is separated in a second step into more or less clear limewater on one hand and bentonite with limewater on the other, having a concentration equal to or greater than 3% sodium montmorillonite, in an accelerated inclined-plate settler or in a drum centrifuge at 1500 rpm, giving a mean acceleration of about 400 times the acceleration of the Earth's gravitational acceleration, in which the bentonite goes to the wall of the drum whereas the bentonite-free limewater remains close to the shaft. This process should last about 10 to 15 seconds while centrifuging at 400 g. This centrifuge has two outlets at different distances from the shaft, one surrounding the inlet for the mixture to be separated, closest to the shaft, for clear water, and another one a little further from the shaft for the exit of 3% bentonite or more, having a density of 1.03 or greater, and both outlets are adjustable, allowing adjustment of the bentonite concentration. Furthermore, the drum of the centrifuge must preferably have an even number of equidistant opposite nozzles having a small diameter that is sufficient for not becoming blocked with the larger pieces of debris that may reach them, where limewater with bentonite and small particles of rock that were not separated on the table exit. All this is done in the absence of CO₂.

The centrifuge most suited for this function must be very resistant to wear on the inside given the presence of debris residues resulting from sawing, which can have a very high hardness on Mhos scale of hardness, so it will be coated with a thick layer of raw rubber or polytrifluorochloroethylene or covered with plates made from one of these materials, adhered before balancing. The drum of the centrifuge is made up of a frustoconical body, attached by its larger base to a cylindrical area having a small height and larger diameter, about 60 mm greater in diameter, in total about 600 mm, to serve 200 simultaneously sawing strips. The cylindrical base is closed with a flat plate screwed to the larger base of the cone frustum and cylindrical area. The exit of water around the inlet tube for the mixture to be separated can be controlled by a ring moving over the inlet tube for the mixture entering the centrifuge while the machine is stopped. The beginning of the outlet for bentonite with limewater, with a concentration greater than 3% sodium montmorillonite, is located at the greatest possible distance from the shaft of the centrifuge, following a radial path towards the shaft and continuing through an even number of equidistant and axial cylindrical holes upon returning from the flat body of the centrifuge, in which holes plugs can be arranged while the machine is stopped to reduce the flow rate. These axial holes must be at a small distance from the shaft of the centrifuge to avoid energy losses. The outlet for limewater with debris resulting from sawing and bentonite consists of a preferably even number of nozzles 300 µm in diameter, which nozzles are located in the cylindrical portion of the drum having a small height and greater diameter than the base of the cone frustum. The debris that is going to exit through the nozzles builds up in the cylindrical space. The outlet for bentonite with more than 3% montmorillonite sodium takes the mixture far from the shaft of the centrifuge, in the area having a diameter of about 500 mm. The inlet for the mixture into the centrifugation area will have a diameter of about 300 mm. To that end, the bottom of the drum has the suitable shape for receiving the mixture to be centrifuged through the shaft and delivered at 300 mm in diameter, forming a layer having a cylindrical or frustoconical surface from which bentonite will be released outwardly and from which limewater will be released towards the shaft. This delivery at 300 mm in diameter requires pumping the incoming mixture so that it exceeds the pressure existing at 300 mm in diameter, for which purpose the end of the inlet tube is equipped with an abrasion resistant pump impeller.

A hollow vertical cylinder can also be used for concentration instead of the centrifuge, where the mixture to be separated enters tangentially at the top at a high speed, having three outlets, namely: an upper axial outlet for water, consisting of a tube coaxial with the cylinder, said tube having several tangential perforations, from the center to the inner end; another lower tangential outlet at a mean radius for the concentrated mixture at 3% sodium bentonite or more; and another lower third tangential outlet at the maximum radius in the same direction of the inlet, having a smaller section, for the concentrated mixture with fine steel residues in the form of powder and debris resulting from sawing not separated on the vibrating table. The three outlets are adjustable to adjust flow rates to the desired concentrations.

The fraction of bentonite with water and debris exiting through the nozzles of the centrifuge, or through the tangential outlet of the hollow cylinder having a smaller section, is taken to a controlled landfill or sold to farm owners to improve nearby sandy soils. The debris separated on the vibrating table and then washed can be sold as aggregates for mortars or concretes.

Losses in the nozzles or in the smaller tangential outlet can be 30 cm³/s of mixture, more or less, for 12 nozzles 0.3 mm in diameter. Bentonite losses per square meter sawed are less than 50 grams for the hardest rocks, excluding basalts. Other rocks that are not as hard have fewer losses.

The necessary concentration to support the grit in suspension without the use of the centrifuge can be achieved by sawing with clay or other fine, soft materials and passing the waters with fine, soft materials exiting the shaking or vibrating table through an accelerated inclined-plate settler, such inclination being about 45º with respect to the horizontal. If the sufficient concentration for supporting the grit is not attained in the plate settler, the mixture to be concentrated can be passed through a hollow cylinder such as the one described above or through a centrifuge like the one also described. That can also be applied to sawing with bentonite.

The inclined-plate settler that is most suitable for concentrating or pre-concentrating the bentonite consists of corrugated plates with a corrugation of 177 mm and 25+25 in height, separated from one another by 15 to 20 mm, the mixture to be concentrated entering through preferably vertical tubes, with grooves at the top of the tubes abutting with the corrugation valleys, at their upper ends, which tubes internally have other tubes with several uniformly distributed perforations not aimed at the grooves so as to not alter the orderly exit of the mixture to be concentrated through the groove.

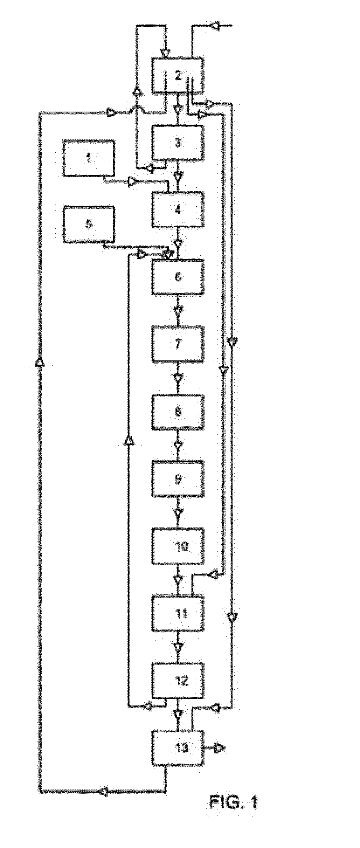

The entire equipment for treating the mixture or sludge resulting from sawing comprises all the elements described in Figure 1.

### DESCRIPTION OF THE DRAWINGS

Figure 1 depicts a general scheme of the process for treating the mixture in which:
   1) is a bentonite feeder or a feeder used to supply another fine, soft material, possibly mixed with quicklime, with a tank having a volume of 1.2 m³, which is sufficient for unloading a large sack.
   2) is a limewater tank with a floater to maintain the water level, closing the fresh water tap. The mixture of water with bentonite is decanted in the lower portion of this tank to a concentration that is a little greater than 1% bentonite. The mixture of water with bentonite concentrated in 3) is taken from the lower portion of this tank.
   3) is a concentrator assembly for concentrating bentonite with limewater to attain the suitable proportion of bentonite so as to support the grit, made up of an accelerated inclined-plate settler and possibly a centrifuge. A centrifugal cylinder can be used instead of the centrifuge.
   4) is a tank with a capacity of about 200 liters, which mixes bentonite concentrated at more than 3% in the centrifuge or in the centrifugal cylinder or in the inclined-plate settler, with fresh quicklime and fresh bentonite if necessary, added with a metering device. This tank is provided with a more or less rapid agitator. A viscometer, which controls the addition of water and bentonite to the tank, is installed at the outlet of said tank in a small widened area.
   5) is a tank for metering fresh grit, with a capacity for about 100 kg of grit.
   6) is another 50 to 200 liter tank with a slow agitator, where there is added to the mixture arriving from the tank 4) the continuously recovered grit, and the fresh mixture from the tank 5), as needed, provided with a grit detector at the outlet which regulates the addition or non-addition of fresh grit.
   7) is a pump driving the mixture from the tank 6) to the device for distributing mixture on the blocks.
   8) is one of the blocks being sawed.
   9) are sieve filters located below the longitudinal ends of the blocks which only allow the abrasive mixture with finer debris resulting from sawing pass therethrough and retain in suitable basins at the lower ends thereof the pieces of rock that are larger than 3 mm in diameter, which are manually dragged and collected in suitable trolleys or tanks, which residues are washed and accumulated for sale.
   10) are collectors of the mixture used at one or more pump sumps from where the mixture is taken to the grit separating equipment after being mixed with recovered limewater.
   11) mixers for mixing water under pressure with the mixture from 10)
   12) are grit separating cyclones.
   13) vibrating table or another equipment for separating almost all the debris
      resulting from sawing.

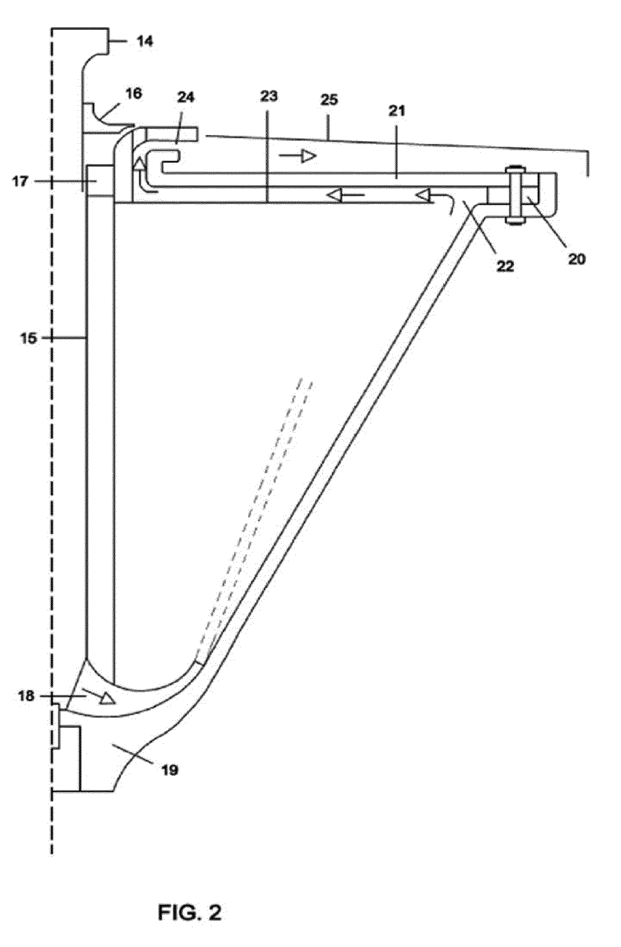

Figure 2 depicts half of the section per shaft of the drum of the centrifuge and of the inlet tube, in which:
   14) is the inlet funnel.
   15) is the inlet tube.
   16) is the part moving over the inlet funnel for regulating the outgoing flow rate of the limewater.
   17) are three or more centering flanges for maintaining the position of the tube 15) as a prolongation of the funnel 14 without contacting it.
   18) is the wear resistant pump impeller driving the incoming mixture to the suitable diameter inside the drum, for which purpose it has radial vanes pumping the incoming mixture to an intermediate diameter between the beginning of the outlet 22) for 3% bentonite or more and the water outlet through the central hole of part 21), between the flanges 17).
   19) is the portion of the body of the drum attached to the shaft of the motor and protected against wear, and it is the portion to which the other portion of the body of the drum, 21), is attached.
   20) is the cylindrical space having a small height where the mixture containing fine debris resulting from sawing not separated on the vibrating table builds up, on the outer surface of which there are mounted the wear resistant nozzles that are about 0.3 mm in diameter, where there exits water with bentonite and fine residues, nozzles not depicted.
   21) is the other, basically flat portion of the body of the drum which is supported on part 19, with opening in the center, where there enters the mixture to be separated through the tube 15 and around which the limewater exits, and it is provided with perforations parallel to the shaft and close to where the 3% bentonite mixture exits.
   22) is the beginning of the outlet, in annulus form, for the 3% bentonite mixture or more.
   23) is a flat disc forming the outlet 22), screwed to part 21), having a protruding edge to center it properly.
   24) is the outlet for 3% bentonite or more, an even amount of axial perforations, which could be obstructed with diametrically opposed pairs of plugs to reduce the flow rate of the mixture of water with 3% bentonite or more, for which purpose parts 25) and 26) must be removed.
   25) is a sheet metal disc demarcating the outlets for water and bentonite.

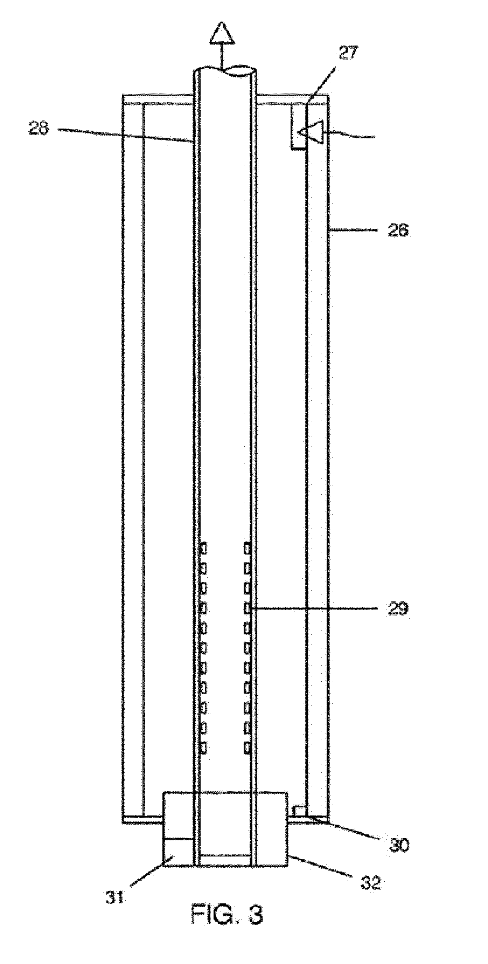

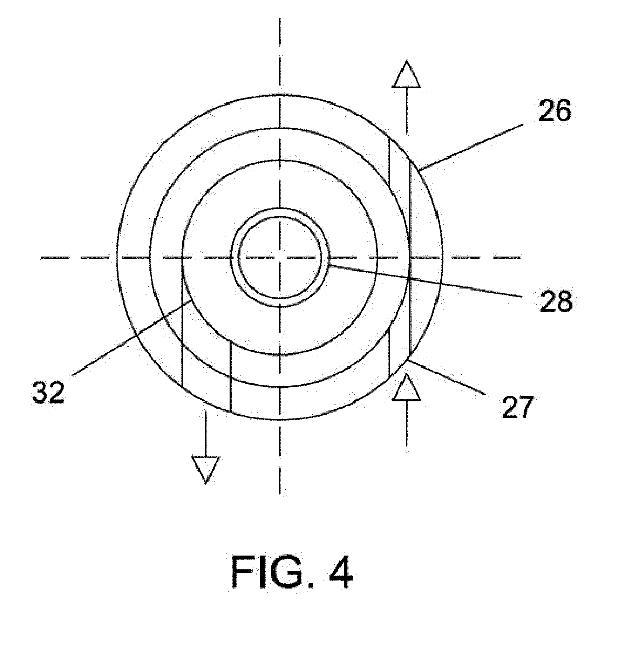

   Figure 3 depicts a section along the shaft of a centrifugal cylinder with three outlets, and Figure 4 shows a plan projection thereof, where:
   26) is the internally smooth, wear resistant tube.
   27) is the inlet that is tangential to the inner surface.
   28) is the coaxial inner tube for the exit of lightweight materials.
   29) are the openings in the inner tube for the passage of the light fraction into the inner tube.
   30) is the outlet for denser residues.
   31) is the outlet for the concentrate, in this case several powders and water.
   32) is a tube sleeve facilitating the separation of outlets 30) and 31).

### EMBODIMENT

The installation of equipment like the one described, with the capacity to prepare the mixture necessary so that two machines of 100 strips each can work simultaneously, with the ducts necessary for serving two other nearby sawing machines is envisaged. These machines would be located in block loading or unloading, in repair, in strip changing, or in stand-by. For a first demonstration, tanks from existing works and drums of lubricating oils that have been washed well could be used. Vibrating tables are easy to acquire, but the centrifuge must be expressly manufactured because there is no centrifuge on the market that can be applied for this purpose. To avoid purchasing the centrifuge for the first demonstration, the concentrated mixture exiting the inclined-plate settler is taken to the necessary bentonite concentration so as to support the grit, adding fresh bentonite to it in tank 4).

### INDUSTRIAL APPLICATION

This method of sawing is conceived for being applied with already existing, very expensive sawing machines in the many factories manufacturing slabs of granite and other hard rocks worldwide. By applying this method, the cost of sawing is reduced to 35% of the current cost or less, and the production can be increased up to four times the current production or more. To that end, the corresponding licenses will be offered to the hundreds of companies existing worldwide.

## Claims

1. Sawing of hard granites with grit, using fine, soft powders to support grit and entrain debris, **characterized in that** the powder used is sodium bentonite.

2. Sawing of hard granites according to claim 1, **characterized in that** the concentration of sodium montmorillonite, the main component of sodium bentonites in the abrasive mixture or sludge is greater than 1 for every 99 of limewater, by mass; grit and others.

3. Sawing of hard granites according to claims 1 and 2, **characterized in that** the limewater, bentonite and grit flows necessary for the concentration of debris upon exiting the groove to be less than 50% by volume are made to reach each groove.

4. Sawing of hard granites according to claim 3, **characterized in that** on one hand, debris and grit residues resulting from sawing with some water and bentonite, and on the other hand, limewater with bentonite and finer debris resulting from sawing are separated in a vibrating or shaking table; also **characterized in that** debris resulting from sawing with some limewater and bentonite can be passed over another table or another board of the same table where more bentonite is recovered.

5. Sawing of hard granites according to claim 4, **characterized in that** the mixture of limewater with bentonite and finer debris that have not been separated on the vibrating table can be passed through a centrifuge where a mean acceleration of about 400 times the Earth's gravitational acceleration is attained, in which centrifuge they will remain for about 10 seconds, where three fractions are separated, namely: a first fraction consisting of more or less clear limewater that is reused to dilute the mixture before going through the cyclone and on the vibrating or shaking table; a second fraction consisting of bentonite with a limewater concentration suitable for supporting grit in suspension or a higher concentration, which is also reused; and finally a third, small fraction containing limewater, bentonite and small debris residues resulting from sawing, which is discarded in a controlled landfill or used to improve sandy soils used for agriculture.

6. Sawing of hard granites according to claim 5, wherein the centrifuge concentrating the mixture and separating debris residues resulting from sawing consists of a motor preferably having a vertical shaft, with a projecting end projecting at the top portion, having a robust construction as regards the shaft, bearings and structure, the drum of the centrifuge being coupled to said projecting end of the shaft; said drum **characterized in that** it consists of a frustoconical body attached to another plane by screws, with a leak-tight seal, being internally protected against abrasion in the areas subjected to abrasion, having in the area of attachment of the two bodies a cylindrical space having a large diameter and short height, on the outer cylindrical surface of which there are located several equidistant nozzles having a small diameter; also **characterized in that** there is externally mounted on the supply tube a sliding part that can be locked in place which allows regulating the outgoing water flow rate, which water exits around the inlet tube, and therefore adjusting the concentration of bentonite at the water with bentonite outlet; also **characterized in that** the bentonite with water outlet consists of an even number of axial holes around the water outlet, and therefore having a greater diameter, which outlet can be modified by plugging up an even number of opposite outlet ducts, as appropriate in each case; also **characterized in that** at the bottom of the drum, at the smaller base of the cone frustum, there is located a part driving the incoming mixture such that it enters the body of the drum at an intermediate diameter between the diameter of the water outlet and the diameter of the beginning of the water with bentonite outlet at a sufficient concentration so as to support the grit in suspension, consisting of one or two horn surfaces, with radial pump-out vanes between both surfaces if there are two, being abrasion resistant or coated with a resistant material.

7. Sawing of hard granites according to claim 4, **characterized in that** once the grit and debris resulting from sawing are separated, the rest of the mixture can be concentrated in an inclined-plate settler until reaching a sufficient concentration so as to support the grit in suspension if possible, and if this is not possible it would be centrifuged.

8. Sawing of hard granites according to claim 7, wherein the inclined-plate settler is formed by corrugated plates 50 mm in width and with a corrugation length of 177 mm, said plates being inclined 45º with respect to the horizontal, **characterized in that** the inlet ducts for the mixture are located next to the lower portions of the corrugation valleys and consist of concentric tubes, the inner tube with one or two perforations for every gap between plates and the outer tubes with an opening along the entire length thereof, which opening abuts with the valleys of the plates.

9. Sawing of hard granites according to claim 4, wherein the concentration of bentonite or of other fine, soft powders keeping the grit in suspension is attained, **characterized in that** the concentration is increased in a tube the interior of which is very resistant to wear and is very smooth, into which tube there enters the mixture to be concentrated in a manner tangential to the inner surface of the tube at a high speed, between 10 and 50 m/s; also **characterized in that** inside it there is another coaxial tube with through openings into its interior in the half of the tube that is spaced from the mixture inlet, with a sufficient section for the passage of the water into it, which water, after traveling through the inner tube, exits through the end thereof closest to the mixture inlet; also **characterized in that** at the end opposite the inlet of the smooth, wear resistant tube there is a concentrated mixture outlet with a mean radius that is the mean of the radii of the two tubes, being externally adjustable and having a section that is suited for the concentrate flow at a rate of about 1 m/s; and finally **characterized by** the existence of an outlet tangential to the inside of the smooth tube, in the direction of the stream, having a small section and also being externally adjustable.

## Amended claims

### Amended claims in accordance with Rule 137(2) EPC.

**1.** Sawing of hard granites with grit, using fine, soft powders to support grit and entrain debris, **characterized in that** the concentration in the sodium montmorillonite support is greater than 1 for every 99 of limewater, by mass; grit and others.

**2.** Sawing of hard granites according to claim 1, **characterized in that** the limewater, bentonite and grit flows necessary for the concentration of debris upon exiting the groove to be less than 50% by volume are made to reach each groove.

**3.** Sawing of hard granites according to claim 2, **characterized in that** on one hand, debris and grit residues resulting from sawing with some water and bentonite, and on the other hand, limewater with bentonite and finer debris resulting from sawing are separated in a vibrating or shaking table; also **characterized in that** debris resulting from sawing with some limewater and bentonite can be passed over another table or another board of the same table where more bentonite is recovered.

**4.** Sawing of hard granites according to claim 3, **characterized in that** the mixture of limewater with bentonite and finer debris that have not been separated on the vibrating table can be passed through a centrifuge where a mean acceleration of about 400 times the Earth's gravitational acceleration is attained, in which centrifuge they will remain for about 10 seconds, where three fractions are separated, namely: a first fraction consisting of more or less clear limewater that is reused to dilute the mixture before going through the cyclone and on the vibrating or shaking table; a second fraction consisting of bentonite with a limewater concentration suitable for supporting grit in suspension or a higher concentration, which is also reused; and finally a third, small fraction containing limewater, bentonite and small debris residues resulting from sawing, which is discarded in a controlled landfill or used to improve sandy soils used for agriculture.

**5.** Sawing of hard granites according to claim 4, wherein the centrifuge concentrating the mixture and separating debris residues resulting from sawing consists of a motor preferably having a vertical shaft, with a projecting end projecting at the top portion, having a robust construction as regards the shaft, bearings and structure, the drum of the centrifuge being coupled to said projecting end of the shaft; said drum **characterized in that** it consists of a frustoconical body attached to another plane by screws, with a leak-tight seal, being internally protected against abrasion in the areas subjected to abrasion, having in the area of attachment of the two bodies a cylindrical space having a large diameter and short height, on the outer cylindrical surface of which there are located several equidistant nozzles having a small diameter; also **characterized in that** there is externally mounted on the supply tube a sliding part that can be locked in place which allows regulating the outgoing water flow rate, which water exits around the inlet tube, and therefore adjusting the concentration of bentonite at the water with bentonite outlet; also **characterized in that** the bentonite with water outlet consists of an even number of axial holes around the water outlet, and therefore having a greater diameter, which outlet can be modified by plugging up an even number of opposite outlet ducts, as appropriate in each case; also **characterized in that** at the bottom of the drum, at the smaller base of the cone frustum, there is located a part driving the incoming mixture such that it enters the body of the drum at an intermediate diameter between the diameter of the water outlet and the diameter of the beginning of the water with bentonite outlet at a sufficient concentration so as to support the grit in suspension, consisting of one or two horn surfaces, with radial pump-out vanes between both surfaces if there are two, being abrasion resistant or coated with a resistant material.

**6.** Sawing of hard granites according to claim 3, **characterized in that** once the grit and debris resulting from sawing are separated, the rest of the mixture can be concentrated in an inclined-plate settler until reaching a sufficient concentration so as to support the grit in suspension if possible, and if this is not possible it would be centrifuged.

**7.** Sawing of hard granites according to claim 6, wherein the inclined-plate settler is formed by corrugated plates 50 mm in width and a corrugation length of 177 mm, said plates being inclined 45º with respect to the horizontal, **characterized in that** the inlet ducts for the mixture are located next to the lower portions of the corrugation valleys and consist of concentric tubes, the inner tube with one or two perforations for every gap between plates and the outer tubes with an opening along the entire length thereof, which opening abuts with the valleys of the plates.

**8.** Sawing of hard granites according to claim 3, wherein the concentration of bentonite or of other fine, soft powders keeping the grit in suspension is attained, **characterized in that** the concentration is increased in a tube the interior of which is very resistant to wear and is very smooth, into which tube there enters the mixture to be concentrated in a manner tangential to the inner surface of the tube at a high speed, between 10 and 50 m/s; also **characterized in that** inside it there is another coaxial tube with through openings into its interior in the half of the tube that is spaced from the mixture inlet, with a sufficient section for the passage of the water into it, which water, after traveling through the inner tube, exits through the end thereof closest to the mixture inlet; also **characterized in that** at the end opposite the inlet of the smooth, wear resistant tube there is a concentrated mixture outlet with a mean radius that is the mean of the radii of the two tubes, being externally adjustable and having a section that is suited for the concentrate flow at a rate of about 1 m/s; and finally **characterized by** the existence of an outlet tangential to the inside of the smooth tube, in the direction of the stream, having a small section and also being externally adjustable.
